# EUROPEAN PATENT APPLICATION

(11) **EP 1 939 495 A1**
(43) Date of publication of application: **02.07.2008**
(21) Application number: 06256622.9
(22) Date of filing: 29.12.2006
(51) Int. Cl.: F16H 57/00, F16H 1/08

(54) **Method and apparatus for reducing vibration in a gear system**

(71) Applicant: Perkins Engines Company Limited, Peterborough, PE1 5NA (GB)
(72) Inventor: Snell, Jon G., Werrington Peterborough Cambridgeshire (GB)
(74) Representative: Wilson, Glen

(57) **Abstract**

A vibration reducing apparatus comprising: a first helical gear (20) mounted on a first shaft (22) and engageable with a second gear (50) mounted on a second shaft (52), wherein at least one of the first helical gear (20) and the second gear (50) is axially movably mounted upon its respective shaft; actuation means (30) adapted to axially move at least one of the first helical gear (20) and the second gear (50) along its respective shaft in at least a first direction during rotation of the first helical gear (20) and the second gear (50); and control means (46) coupled to the actuation means (30) and adapted to control the amount of axial movement of the gear being moved by the actuation means (30).

## Description

### Technical Field

The present disclosure relates to apparatus and methods for reducing vibrations in a gear system, in particular for reducing torsional and axial vibrations in a gear system connected to a reciprocating engine.

### Background

Reciprocating engines produce unwanted torsional and axial vibrations which are transmitted via the crankshaft to the connected transmission system. These vibrations can cause high loads which can cause damage to the gearing or can produce noise. Various damping systems are presently used to reduce the vibrations but with only limited success since such systems are merely reactive. Consequently, the gearing must be designed to accommodate these vibrations and this increases the mass, inertia and cost of the gearing.

Helical gears have gear teeth which are formed at an oblique angle to the axis of rotation. Helical gears are frequently used in known transmission systems. The main reason for this is that the angled teeth of two meshing helical gears provides a gradual contact between the respective teeth which starts at one end of each tooth and gradually spreads as the gears rotate until the two teeth are in full engagement. This results in smoother meshing of the gears with less noise. However, the angle of contact of the teeth produces a contact force which is also oblique to the axis of rotation. This contact force can be resolved to be an axial force and a circumferential force which is normal to the axial force. The circumferential force rotates the driven helical gear. However, the axial force is conventionally undesirable and axial or thrust bearings are typically provided to resist this load.

### Summary of the Disclosure

According to a first aspect of the present disclosure, there is provided a vibration reducing apparatus comprising:
a first helical gear mounted on a first shaft and engageable with a second gear mounted on a second shaft, wherein at least one of the first helical gear and the second gear is axially movably mounted upon its respective shaft;
actuation means adapted to axially move the or each movable gear along its respective shaft in at least a first direction during rotation of the first helical gear and the second gear, thereby modifying the contact force between the first helical gear and the second gear; and
control means coupled to the actuation means and adapted to control the amount of axial movement of the gear being moved by the actuation means.

According to a second aspect of the present disclosure, there is provided a method of reducing vibration in a transmission system comprising:
providing a first helical gear mounted on a first shaft;
providing a second gear mounted on a second shaft and engaging with the first helical gear;
axially movably mounting at least one of the first helical gear and the second gear upon its respective shaft;
axially moving the or each movable gear along its respective shaft in at least a first direction during rotation of the first helical gear and the second gear, thereby modifying the contact force between the first helical gear and the second gear; and
controlling the amount of axial movement of the gear being moved by the actuation means.

According to a third aspect of the present disclosure, there is provided a transmission system comprising a vibration reducing apparatus in accordance with the first aspect of the disclosure.

According to a fourth aspect of the present disclosure, there is provided a vehicle comprising a vibration reducing apparatus in accordance with the first aspect of the disclosure.

### Brief Description of the Drawings

An embodiment of the present disclosure will now be described, by way of example only, with reference to the accompanying drawings, in which:
Fig. 1 is a perspective view of a gear system including a first embodiment of a vibration reducing apparatus;
Fig. 2 is a graph of the rotational speed of a gear of the gear system of Fig. 1 and of a gear of a gear system without a vibration reducing apparatus;
Fig. 3 is a side view of the vibration reducing apparatus of Fig. 1;
Fig. 4 is a side view of a second embodiment of a vibration reducing apparatus;
Fig. 5 is a perspective view of two meshing helical gears, each mounted on a shaft;
Fig. 6 is a perspective diagrammatic view of a helical gear;
Fig. 7 is a perspective view of a gear system including a further embodiment of a vibration reducing apparatus;
Fig. 8 is a perspective view of a gear system including a further embodiment of a vibration reducing apparatus;
Fig. 9 is a perspective view of a gear system including a further embodiment of a vibration reducing apparatus;

### Detailed Description

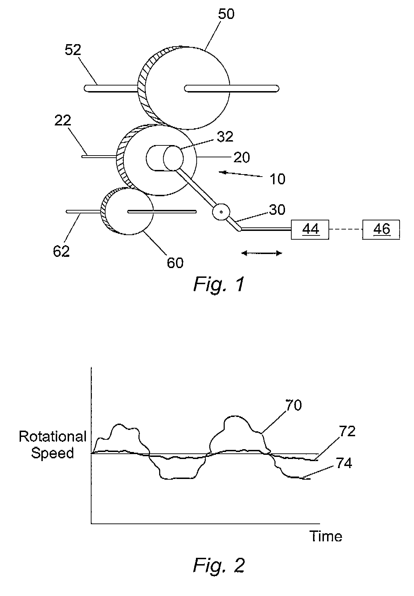

Fig. 1 shows a vibration reducing apparatus 10 which comprises a first helical gear 20 mounted on a first shaft 22 which is the crankshaft of a reciprocating engine (not shown). The first helical gear 20 is engaged with a second gear 50 which is also a helical gear, although conceivably both the first and second gears 20, 50 could be a standard spur gear which are mounted on a helical shaft. The second helical gear 50 is mounted on a second shaft 52 and is a timing gear of a transmission (not shown) connected to the engine. Also shown is a third gear 60, which is an idler gear and is also helical and mounted on a third shaft 62. However, an idler gear and shaft could be omitted and the principle of axial movement as described below could be applied to either (or both) of the first and second gears and shafts.

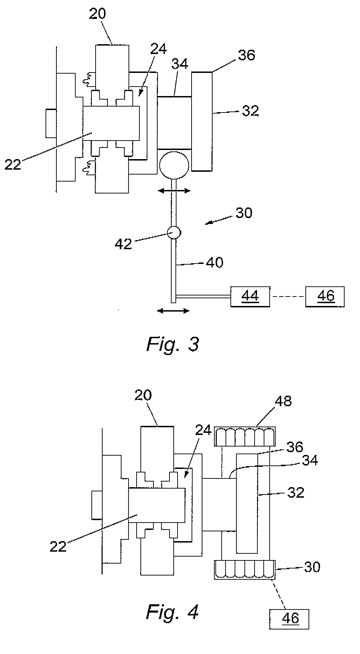

The first helical gear 20 is arranged to be axially movably mounted upon the first shaft 22. As shown in Figs. 3 and 4, a slide bearing unit 24 is provided between the first helical gear 20 and the first shaft 22.

Actuation means 30 is provided for moving the first helical gear 20 along the first shaft 22 in both axial directions during rotation of the gears. The actuation means 30 comprises a collar 32 which is non-rotatably connected to the first helical gear 20. The collar 32 defines a neck portion 34 and flange 36.

In the first embodiment of Fig. 3, the neck portion 34 and flange 36 provide a guide recess for a movable lever arm 40. The lever arm 40 can be pivoted about a pivot point 42 by an electric motor 44 to move the first helical gear 20 along the first shaft 22 in either axial direction.

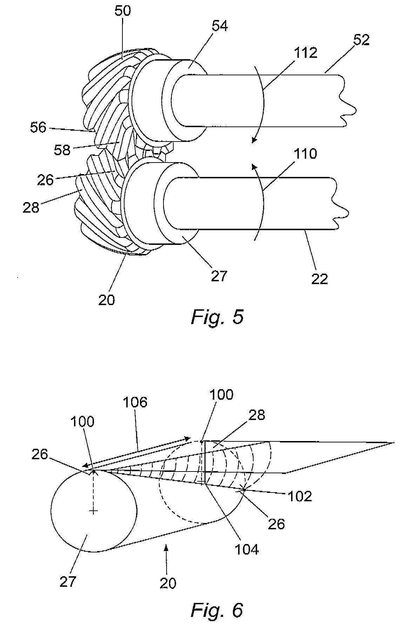

Fig. 5 shows a perspective view of the first helical gear 20 meshing with the second helical gear 50. Rotation of the first helical gear 20 in a particular direction 110 at a particular rotational speed causes the second helical gear 50 to rotate in an opposite direction 112 at the same rotational speed (if the two gears have the same diameter). Each tooth 26 of the first helical gear 20 sweeps from a first circumferential position 100 at a first face 27 of the gear 20 to a second circumferential position 102 at a second face 28 of the gear 20. The second circumferential position 102 is offset by an angle 104. This is shown diagrammatically in Fig. 6. The teeth of the second helical gear 50 are similarly arranged.

The behaviour of the two gears when one of the gears is axially moved during rotation can be considered to be the behaviour of the two gears when initially static and one of the gears is axially moved superimposed upon the normal rotation of the two gears. For clarity, the behaviour of the two gears when initially static will now be described.

A tooth 58 of the second helical gear 50 may initially be in contact with the tooth 26 of the first helical gear 20 near the first circumferential position 100 at the first face 27 of the gear 20. When the first helical gear 20 is moved by a distance 106, the changing circumferential position of the tooth 26 acting on the tooth 28 of the second helical gear 50 causes the second helical gear 50 to rotate. When the tooth 58 of the second helical gear 50 is in contact with the tooth 26 of the first helical gear 20 near the second circumferential position 102 at the second face 28 of the gear 20, the second helical gear 50 has rotated by an amount equal to the offset angle 104. Therefore, the rotational position of the second helical gear 50 has been modified by axial movement of the first helical gear 20. During rotation of the two gears, the axial movement of the first helical gear 20 also causes a change in the rotational speed of the second helical gear 50.

Axial movement of the first helical gear 20, and its effect on the second helical gear 50, may also be conceptualised in another manner. Moving the first helical gear 20 along the first shaft 22 in either axial direction modifies the contact force between the first helical gear 20 and the second helical gear 50 (and also the third helical gear 60). The contact force is increased or decreased depending on the direction in which the first helical gear 20 is moved. Modifying the contact force causes the second helical gear 50 (and also the third helical gear 60) to be driven slower or faster. Thus the rotational speed and position of the second helical gear 50 (and also the third helical gear 60) are modified.

Fig. 2 shows the typical rotational speed 70 of the third helical gear 60 against time in a known gear system or when the vibration reducing apparatus 10 is not being operated. A graph of the rotational position of the third helical gear 60 against time would be very similar. Axial or torsional vibration causes the position of the gear 60 to be advanced or retarded from a theoretical position. The theoretical speed 72 of the third helical gear 60 in the absence of vibrations is also shown. The reciprocating engine typically produces a sinusoidal vibrational response superimposed upon the theoretical speed 72. In addition, higher engine frequencies are also present.

The actual vibrational response 70 in a given gear system can now be predicted with substantial accuracy using available modelling tools. Alternatively, the actual vibrational response 70 in a given gear system can be previously measured.

The vibration reducing apparatus 10 includes a controller 46 which is electrically connected to the motor 44 of the actuation means 30. The controller 46 includes a readable memory which includes stored data comprising values of axial movement of the gear being moved for a given predicted or previously measured value of vibration. The controller 46 operates the motor 44 to operate the lever arm 40 to axially move the first helical gear 20 by an amount stored in the memory. The controller 46 therefore controls the amount of axial movement of the first helical gear 20 to substantially reduce vibrations in the gear system.

Fig. 2 also shows the typical rotational speed 74 of the third helical gear 60 against time when the vibration reducing apparatus 10 is being operated. Vibrations in the gear system have been reduced.

In the second embodiment of Fig. 4, the mechanical actuation means has been replaced by an electromagnetic actuator such as a solenoid 48. Otherwise, the same principle of axial movement of the first helical gear 20 applies.

In another embodiment of the disclosure, the vibration reducing apparatus 10 may include a sensor for sensing either the rotational position or rotational speed of one of the gears. In this embodiment, the memory of the controller 46 may include stored data comprising values of axial movement of the first helical gear 20 which correspond to the sensed rotational position or speed. The controller 46 can include a comparator for comparing actual (sensed) position or speed with the theoretical position or speed and move first helical gear 20 accordingly to minimise the difference. Such an embodiment therefore provides closed loop control to minimise vibrations in the gear system.

In another embodiment of the disclosure, the sensor may sense an environmental parameter which is external to the gear system, such as engine or vehicle speed or crankshaft position. The memory of the controller 46 would then include stored data comprising values of axial movement of the gear being moved which correspond to the sensed value of the external environmental parameter.

In another embodiment of the disclosure, the vibration reducing apparatus 10 may be arranged to move the first helical gear 20 in only a first axial direction. In such case, biasing means such as a spring may be provided to axially move the first helical gear 20 in a second opposite direction.

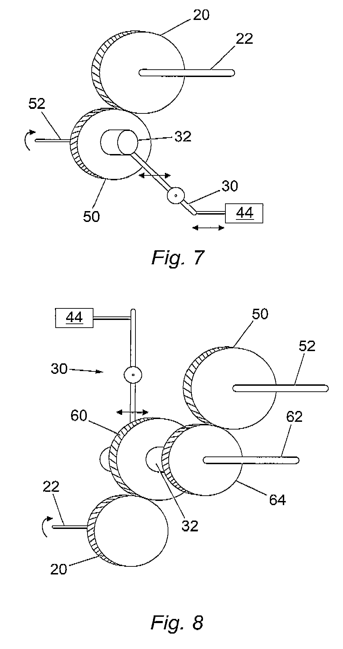

Fig. 7 shows another embodiment in which the idler gear and shaft has been omitted. Also in this embodiment, the actuation means 30 is coupled to the second gear 50.

Fig. 8 shows another embodiment which includes an idler gear arrangement provided between the crank gear 20 and second gear 50. To avoid the vibration reduction being cancelled out, the idler gear arrangement comprises a first idler gear 60 which is axially movable and coupled to the actuation means 30 and a second idler gear 64 which is non-axially movable.

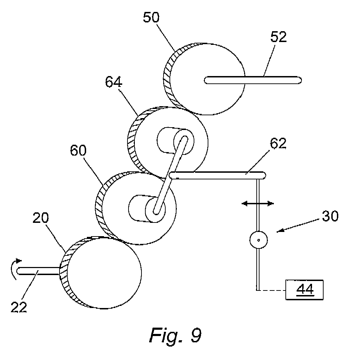

Fig. 9 shows another embodiment which includes an idler gear arrangement provided between the crank gear 20 and second gear 50. To avoid the vibration reduction being cancelled out, the idler gear arrangement comprises two idler gears 60, 64 arranged in series. Both idler gears are coupled to the actuation means 30 and are axially movable.

### Industrial Applicability

The present disclosure provides an apparatus and method for reducing torsional and axial vibrations in a gear system connected to a reciprocating engine.

Vibrations cause an increase or decrease in the theoretical speed 72 of the gears. Consequently, the rotational position of the gears are advanced or retarded by a certain value. By axially moving the first helical gear 20 by a suitable amount, the gears can be retarded or advanced by the same value to compensate for changes in rotational position caused by vibration. For instance, in Fig. 6, if a particular vibration caused a retarding of the rotational position of a gear by a value equal to the offset angle 104, moving the first helical gear 20 by distance 106 would accurately compensate for this change in rotational position.

Axial movement of the first helical gear 20 along the first shaft 22 also modifies the contact force between the first helical gear 20 and the second helical gear 50 (and also the third helical gear 60) and this causes the second helical gear 50 (and also the third helical gear 60) to be driven slower or faster. This increase or decrease in rotational speed can be used to compensate for decreases or increases in rotational speed caused by torsional and axial vibrations. Thus torsional and axial vibrations in the gear system are reduced.

Consequently, the gear system can be designed for lower loads and this decreases the mass, inertia and cost of the gearing. Also, less noise is produced.

An advantage of the disclosed apparatus is that helical gears are already frequently used in transmission systems and so little modification of the existing system is required. The contact force between helical gears in existing systems comprises an axial force and a circumferential force and the present disclosure simply utilises this existing axial force.

In known passive systems, the amount of axial movement of a gear may not accurately correspond to the desired amount of rotation required to compensate for rotation caused by vibrations. Unlike these known passive systems, the present disclosure provides active and accurate control of vibrations within the gear system. This control is variable and suitable for a wide range of applications in which vibrations are present, and is responsive to rapid changes in internal or external system parameters.

Various modifications and improvements can be made without departing from the scope of the present disclosure.

## Claims

1. A vibration reducing apparatus comprising:
a first helical gear mounted on a first shaft and engageable with a second gear mounted on a second shaft, wherein at least one of the first helical gear and the second gear is axially movably mounted upon its respective shaft;
actuation means adapted to axially move at least one of the first helical gear and the second gear along its respective shaft in at least a first direction during rotation of the first helical gear and the second gear; and
control means coupled to the actuation means and adapted to control the amount of axial movement of the gear being moved by the actuation means.

2. A vibration reducing apparatus as claimed in Claim 1, wherein the actuation means adapted to axially move the first helical gear to modify at least one of the rotational speed and the rotational position of the second gear.

3. A vibration reducing apparatus as claimed in Claim 1 or 2, wherein the actuation means adapted to axially move at least one of the first helical gear and the second gear to modify the contact force between the first helical gear and the second gear.

4. A vibration reducing apparatus as claimed in any preceding claim, wherein the control means includes a readable memory.

5. A vibration reducing apparatus as claimed in Claim 4, wherein the memory includes stored data comprising a plurality of values of axial movement of the gear being moved, each value corresponding to a predicted or previously measured value of vibration.

6. A vibration reducing apparatus as claimed in Claim 4 or 5, including a sensor adapted to sense the rotational position or rotational speed of one of the first helical gear and the second gear, wherein the memory includes stored data comprising a plurality of values of axial movement of the gear being moved, each value corresponding to a sensed rotational position or rotational speed of one of the first helical gear and the second gear.

7. A vibration reducing apparatus as claimed in any of Claims 4 to 6, including a sensor adapted to sense an external environmental parameter, and wherein the memory includes stored data comprising a plurality of values of axial movement of the gear being moved, each value corresponding to a sensed value of the external environmental parameter.

8. A vibration reducing apparatus as claimed in any preceding claim, wherein the actuation means is adapted to axially move at least one of the first helical gear and the second gear along its respective shaft in a second opposite direction during rotation of the first helical gear and the second gear.

9. A vibration reducing apparatus as claimed in any of Claims 1 to 7, including biasing means adapted to axially move at least one of the first helical gear and the second gear along its respective shaft in a second opposite direction during rotation of the first helical gear and the second gear.

10. A vibration reducing apparatus as claimed in any preceding claim, wherein the actuation means comprises a mechanical actuator.

11. A vibration reducing apparatus as claimed in any of Claims 1 to 9, wherein the actuation means comprises an electromagnetic actuator.

12. A vibration reducing apparatus as claimed in any preceding claim, wherein the second gear is a helical gear.

13. A vibration reducing apparatus as claimed in any preceding claim, wherein the second gear is the gear of a crankshaft.

14. A vibration reducing apparatus as claimed in any preceding claim, including a third timing gear mounted on a third shaft, and wherein the first helical gear is an idler gear.

15. A method of reducing vibration in a transmission system comprising:
providing a first helical gear mounted on a first shaft;
providing a second gear mounted on a second shaft and engaging with the first helical gear;
axially movably mounting at least one of the first helical gear and the second gear upon its respective shaft;
axially moving at least one of the first helical gear and the second gear along its respective shaft in at least a first direction during rotation of the first helical gear and the second gear; and
controlling the amount of axial movement of the gear being moved by the actuation means.

16. A method as claimed in Claim 15, including axially moving the first helical gear to modify at least one of the rotational speed and the rotational position of the second gear.

17. A method as claimed in Claim 15 or 16, including axially moving at least one of the first helical gear and the second gear to modify the contact force between the first helical gear and the second gear.

18. A method as claimed in any of Claims 15 , including axially moving at least one of the first helical gear and the second gear along its respective shaft in response to a predicted or previously measured value of vibration.

19. A method as claimed in any of Claims 15 to 18, including sensing the rotational position or rotational speed of one of the first helical gear and the second gear, and including axially moving at least one of the first helical gear and the second gear along its respective shaft in response to the sensed rotational position or rotational speed of one of the first helical gear and the second gear.

20. A method as claimed in any of Claims 15 to 19, including sensing an external environmental parameter, and including axially moving at least one of the first helical gear and the second gear along its respective shaft in response to the sensed value of the external environmental parameter.

21. A method as claimed in any of Claims 15 to 20, including axially moving at least one of the first helical gear and the second gear along its respective shaft in a second opposite direction during rotation of the first helical gear and the second gear.

22. A transmission system comprising a vibration reducing apparatus as claimed in any of Claims 1 to 14.

23. A vehicle comprising a vibration reducing apparatus as claimed in any of Claims 1 to 14.
